# EUROPEAN PATENT SPECIFICATION

(11) **EP 2 521 306 B1**
(45) Date of publication and mention of the grant of the patent: **29.07.2015**
(21) Application number: 10791213.1
(22) Date of filing: 09.04.2010
(51) Int. Cl.: H04L 12/24, H04L 12/26, H04L 1/00

(54) **ETHERNET TRAFFIC STATISTICAL ANALYSIS METHOD AND SYSTEM**
VERFAHREN UND SYSTEM ZUR ANALYSE VON ETHERNET-VERKEHRSSTATISTIKEN
PROCÉDÉ ET SYSTÈME D'ANALYSE STATISTIQUE DE TRAFIC ETHERNET

(30) Priority: 29.12.2009 CN 200910261737
(43) Date of publication of application: 07.11.2012
(73) Proprietor: ZTE Corporation, Shenzhen, Guangdong 518057 (CN)
(72) Inventor: WU, Shaoyong, Shenzhen Guangdong 518057 (CN)
(74) Representative: Garratt, Peter Douglas
(86) International application number: PCT/CN2010/071671
(87) International publication number: WO 2010/148707

(56) References cited:
- EP-A2- 0 494 335
- WO-A1-2009/047015
- CN-A- 1 863 094
- US-A1- 2008 049 630

## Description

### Field of the Invention

The present invention relates to a traffic statistical technology in data communication, and more particularly, to an Ethernet traffic statistics and analysis method and system.

### Background of the Invention

Since the Ethernet is developing into a carrier grade network which carries multiple services, and especially since some services have higher requirements on network reliability and real-time performance, it is more important to monitor and manage the Ethernet traffic. The traffic distribution of the Ethernet can be learned through analyzing the Ethernet traffic to achieve better network performance and services. When a packet is lost in the Ethernet, the fault point can be found quickly and the fault process can be analyzed efficiently to locate the fault and evaluate the impact on the services quickly.

Generally, in the existing technology, a node counts such information as the number of sent and received packets, the number of lost packets and the number of error packets etc. of a port of the node itself, and then reports this statistical information to a traffic analyzing node. The traffic analyzing node, according to the statistical information and a statistical time interval of each reporting node, calculates the rates of the sent and received packets, the lost packets and the error packets etc. of the egress port, and after collecting the information, a traffic information diagram of the whole network can be formed to monitor and manage the network traffic visually. The traffic analyzing node, which may be an independent node or server, is configured to count and analyze the collected traffic information. The traffic analyzing node may be also a node which is counted, under which circumstance other counted nodes besides the traffic analyzing node are called traffic analyzed nodes.

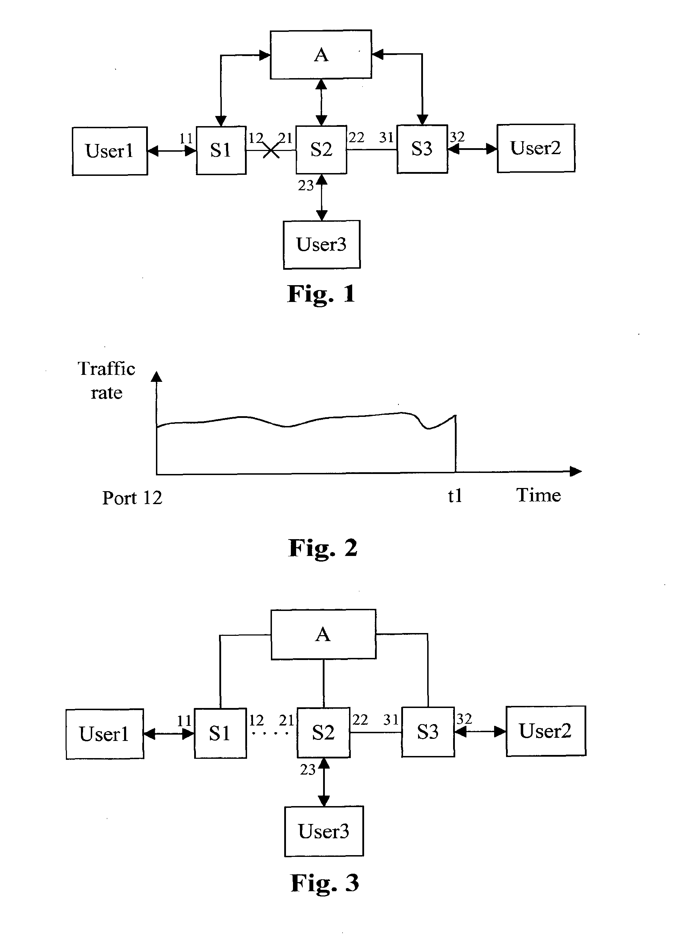

When services cannot be provided because of a fault which occurs in a certain link in the Ethernet, the traffic rate of the fault link will decrease rapidly, thus the link in which the fault occurs can be easily analyzed by a network traffic distribution diagram. As shown in Fig. 1, Node S1, Node S2 and Node S3 are all nodes which support Ethernet functions, and User1, User2 and User3 are user nodes which communicate through Node S1, Node S2 and Node S3. Node S1, Node S2 and Node S3 are respectively coupled with a traffic analyzing node A. Node S1, Node S2 and Node S3 respectively count such information as the number of sent and received packets, the number of lost packets and the number of error packets etc. of the ports of the nodes themselves, and then report the statistical information to the traffic analyzing node A. The traffic analyzing node A, according to the statistical information and statistical time intervals of the nodes, calculates the rates of the sent and received packets, the lost packets and the error packets etc. of the egress ports. For example, when a fault occurs in the link between Node S1 and Node S2 to cause a link failure, the traffic rate of Port 12 of Node S1 is as shown in Fig. 2, and the traffic rate decreases rapidly to 0 at Moment t1. It can be observed from the traffic analyzing node A that the traffic rate of Port 12 of Node S1 decreases rapidly, thus it is easily learned that a fault occurs in the link corresponding to Port 12 of Node S1; and it can be seen from Fig. 2 that the time when the fault occurs is Moment t1.

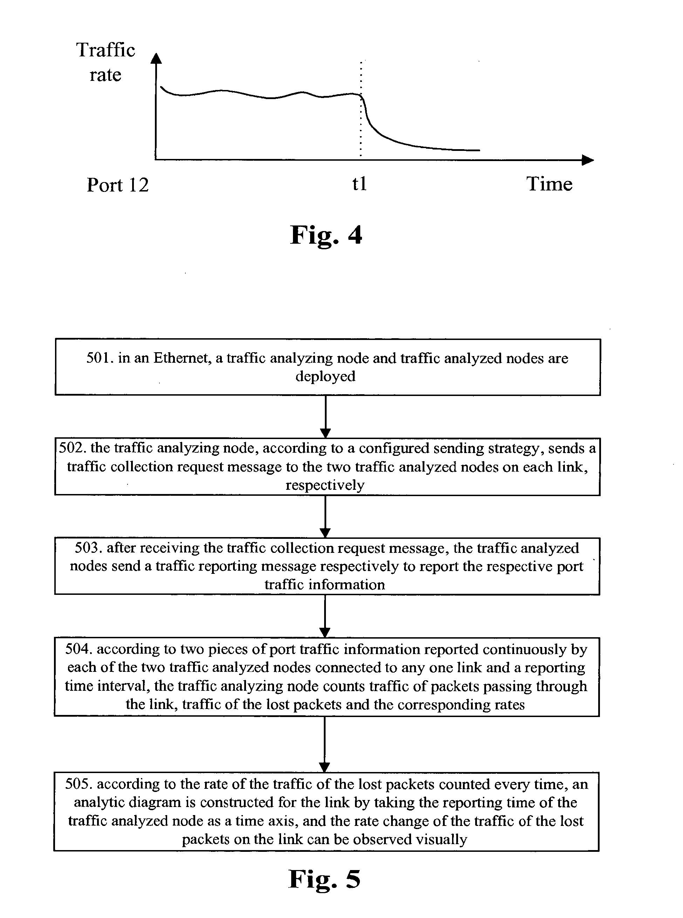

However, the Ethernet traffic statistics and analysis methods in the existing technology can only analyze the traffic information of a node port and fail to analyze the corresponding data of a link, thus the actual traffic of the network cannot be reflected accurately. For example, in Fig. 3, the link between Node S1 and Node S2 is not completely disconnected when a fault occurs therein and can still transmit data. However, a large number of packets are lost on the link, and the lost packets on the link cannot be counted by Node S1 and Node S2 at the moment. Fig. 4 shows a diagram illustrating the traffic rate of Port 12 of Node S1 counted by the traffic analyzing node A, from which it can be observed that the traffic rate of Port 12 of Node S1 decreases somewhat. However, the decrease in the traffic rate may be caused by normally decreased transmitting and receiving flows of users. Therefore, it cannot be judged that a fault occurs in the link corresponding to Port 12 of Node S1 only by the decrease in the traffic rate of the node port. Network abnormality cannot be observed in Fig. 4, however a fault has already occurred in the communication between Node S1 and Node S2.

Reference is directed to EP 0 494 335 which discloses a system for collecting and displaying statistical data for a plurality of local area networks (LANs). The data is collected in several remote nodes, each of which is attached to a local area network. The data is obtained by using a LAN driver that intercepts all records on the LAN. The records are sent to a collector process where statistics are accumulated into a shared memory area and then transferred to an archiver process in a management node. Reference is also directed to US 2008/049630 which discloses a system for monitoring and optimizing network performance to a wireless device including a wireless router in communication with the wireless device, the wireless router configured to determine network performance information of the wireless network; concatenate the network performance information into data packets; a packet network switch in communication with the wireless router for communicating the data packets between the wireless router and the packet network switch; and a network management device in communication with the packet network switch for instructing the packet network switch to route the data packets to the wireless router based on the network performance information to optimize the network performance to the wireless device.

### Summary of the Invention

In view of the above, the present invention provides an Ethernet traffic statistics and analysis method and system so that a current state of a link can be reflected accurately and a fault position can be located quickly.

The technical solution of the present invention is realized as follows.

The present invention provides an Ethernet traffic statistics and analysis method. The method comprises:
according to two pieces of port traffic information reported continuously by each of two traffic analyzed nodes which are connected to any one link and a reporting time interval, a traffic analyzing node counting traffic of packets passing through the link, traffic of lost packets and corresponding rates, and constructing an analytic diagram according to the rate of the traffic of the lost packets counted every time;
wherein the port traffic information comprises counting information of sent and received packets of a port of the traffic analyzed node.

In the above solution, the step of constructing an analytic diagram according to the rate of the traffic of the lost packets counted every time comprises: according to the rate of the traffic of the lost packets counted every time, constructing the analytic diagram by taking a reporting time of the traffic analyzed node as a time axis.

In the above solution, the method further comprises: according to a configured sending strategy, the traffic analyzing node sending a traffic collection request message to the two traffic analyzed nodes on each link respectively; after receiving the traffic collection request message, the traffic analyzed nodes sending a traffic reporting message respectively to report respective port traffic information.

In the above solution, the two traffic analyzed nodes which are connected to any one link are a first node and a second node;
the counted traffic of the packets passing through the link comprises: total traffic of packets sent from the first node to the second node, traffic of packets successfully sent from the first node to the second node, total traffic of packets sent from the second node to the first node, and traffic of packets successfully sent from the second node to the first node.

In the above solution, the traffic of the lost packets comprises: traffic of lost packets from the first node to the second node, and traffic of lost packets from the second node to the first node.

The present invention also provides an Ethernet traffic statistics and analysis system, comprising: an analyzing node and two analyzed nodes which are connected to at least one link, wherein
the analyzing node is configured to, according to two pieces of port traffic information reported continuously by each of the two analyzed nodes which are connected to any one link and a reporting time interval, count traffic of packets passing through the link, traffic of lost packets and corresponding rates, and construct an analytic diagram according to the rate of the traffic of the lost packets counted every time; and
the analyzed nodes are configured to report respective port traffic information to the analyzing node.

In the above solution, the analyzing node is further configured to, according to a configured sending strategy, send a traffic collection request message to the two analyzed nodes on each link respectively;
the analyzed nodes are further configured to, after receiving the traffic collection request message, send a traffic reporting message respectively to report respective port traffic information.

In accordance with the Ethernet traffic statistics and analysis method and system provided by the present invention, according to two pieces of port traffic information reported continuously by each of two traffic analyzed nodes which are connected to any one link and a reporting time interval, a traffic analyzing node counts traffic of packets passing through the link, traffic of lost packets and corresponding rates, and constructs an analytic diagram according to the rate of the traffic of the lost packets counted every time. In this way, statistics and analysis can be performed for the traffic on the link in the Ethernet. The current state of the link, i.e. information such as sent and received packets and lost packets etc. on the link, can be reflected accurately to better learn the traffic distribution of the Ethernet. In addition, when a fault occurs or a packet is lost on the link, the fault position can be quickly located and the fault impact can be accurately evaluated, which is in favor of improving the management and maintenance efficiencies.

### Brief Description of the Drawings

Fig. 1 is a schematic diagram illustrating a network with traffic statistical function;
Fig. 2 is a statistical analytic diagram of the traffic rate of Port 12 of Node S1 in the network as shown in Fig. 1;
Fig. 3 is a schematic diagram illustrating a network in which a link can still transmit part of the data when a fault occurs therein;
Fig. 4 is a diagram illustrating the traffic rate of Port 12 of Node S1 counted by the node A in the network as shown in Fig. 3;
Fig. 5 is a schematic diagram illustrating a flow for realizing an Ethernet traffic statistics and analysis method in accordance with an embodiment of the present invention;
Fig. 6 is a structural schematic diagram illustrating an Ethernet traffic statistics and analysis system realized in accordance with an embodiment of the present invention;
Fig. 7 is a schematic diagram illustrating a flow for realizing an Ethernet traffic statistics and analysis method in Embodiment 1 of the present invention;
Fig. 8 is a statistical analytic diagram of the traffic rate of the lost packets of the link from Node S1 to Node S2 in Embodiment 1 of the present invention;
Fig. 9 is a schematic diagram illustrating a structure of an Ethernet ring network in Embodiment 2 of the present invention;
Fig. 10 is a structural diagram when a fault occurs in a link between Node S2 and Node S3 in the Ethernet ring network as shown in Fig. 9;
Fig. 11 is a schematic diagram illustrating a flow for realizing an Ethernet traffic statistics and analysis method in Embodiment 2 of the present invention; and
Fig. 12 is a statistical analytic diagram of the traffic rate of lost packets of the link from Node S2 to Node S3 in Embodiment 2 of the present invention.

### Detailed Description of the Embodiments

The basic idea of the present invention is that: according to two pieces of port traffic information reported continuously by each of two traffic analyzed nodes which are connected to any one link and a reporting time interval, a traffic analyzing node counts traffic of packets passing through the link, traffic of lost packets and corresponding rates, and constructs an analytic diagram according to the rate of the traffic of the lost packets counted every time.

The present invention is further described in details below according to the accompanying drawings and specific embodiments.

The present invention realizes an Ethernet traffic statistics and analysis method. As shown in Fig. 5, the method comprises the following steps.

Step 501: in an Ethernet, a traffic analyzing node and traffic analyzed nodes are deployed.

There are at least two traffic analyzed nodes, which are two connected nodes in one link. There may be also more than two traffic analyzed nodes, and at least one link is provided to connect each traffic analyzed node.

Step 502: the traffic analyzing node, according to a configured sending strategy, sends a traffic collection request message to the two traffic analyzed nodes on each link respectively.

In this step, the configured sending strategy may be sending on schedule or sending aperiodicity.

Step 503: after receiving the traffic collection request message, the traffic analyzed nodes send a traffic reporting message respectively to report respective port traffic information.

In this step, the port traffic information comprises counting information of sent and received packets of a port of the traffic analyzed node

Step 504: according to two pieces of port traffic information reported continuously by each of the two traffic analyzed nodes which are connected to any one link and a reporting time interval, the traffic analyzing node counts traffic of packets passing through the link, traffic of lost packets and corresponding rates.

More specifically, it is assumed that the two traffic analyzed nodes connected to any one link are Node A and Node B respectively and the time interval between two continuous reporting is T. The traffic of the packets passing through the link comprises: the total traffic of packets sent from Node A to Node B, the traffic of packets successfully sent from Node A to Node B, the total traffic of packets sent from Node B to Node A, and the traffic of packets successfully sent from Node B to Node A. The traffic of the lost packets comprises: the traffic of lost packets from Node A to Node B, and the traffic of lost packets from Node B to Node A.

The total traffic of packets sent from Node A to Node B can be obtained by deducting the counted number of sent packets of the port reported by Node A last time from the counted number of sent packets of the port reported by Node A this time. The traffic of the packets successfully sent from Node A to Node B can be obtained by deducting the counted number of received packets of the port reported by Node B last time from the counted number of received packets of the port reported by Node B this time. The traffic of the lost packets from Node A to Node B can be obtained by deducting the traffic of the packets successfully sent from Node A to Node B from the total traffic of packets sent from Node A to Node B.

The total traffic of packets sent from Node B to Node A can be obtained by deducting the counted number of sent packets of the port reported by Node B last time from the counted number of sent packets of the port reported by Node B this time. The traffic of the packets successfully sent from Node B to Node A can be obtained by deducting the counted number of received packets of the port reported by Node A last time from the counted number of received packets of the port reported by Node A this time. The traffic of the lost packets from Node B to Node A can be obtained by deducting the traffic of the packets successfully sent from Node B to Node A from the total traffic of packets sent from Node B to Node A.

The rate of the traffic of the packets passing through the link and the rate of the traffic of the lost packets can be obtained by dividing the traffic of the packets passing through the link and the traffic of the lost packets by the time interval T, respectively.

Step 505: according to the rate of the traffic of the lost packets counted every time, an analytic diagram is constructed for the link by taking the reporting time of the traffic analyzed node as a time axis, then the rate change of the traffic of the lost packets on the link can be observed visually.

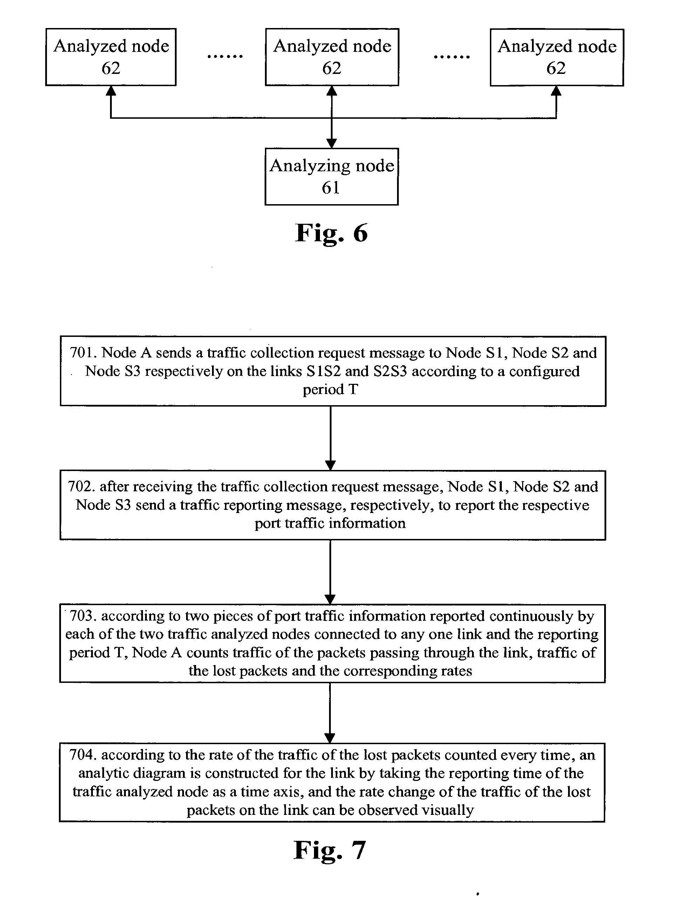

Based on the method above, an embodiment of the present invention provides an Ethernet traffic statistics and analysis system. As shown in Fig. 6, the system comprises: an analyzing node 61 and analyzed nodes 62, wherein
the analyzing node 61 is configured to, according to two pieces of port traffic information reported continuously by each of two analyze nodes 62 connected to any one link and a reporting time interval, count traffic of packets passing through the link, traffic of the lost packets and the corresponding rates, and construct an analytic diagram according to the rate of the traffic of the lost packets counted every time;
the analyzed nodes 62 at least comprise two nodes connected to one link, and are configured to report the respective port traffic information to the analyzing node 61. Here, the port traffic information comprises: counting information of sent and received packets of the ports.

The analyzing node 61 is further configured to, according to a configured sending strategy, send a traffic collection request message to the two analyzed nodes on each link, respectively.

The analyzed nodes 62 are configured to, after receiving the traffic collection request message, send a traffic reporting message respectively to report the respective port traffic information.

The process and principle for realizing the method of the present invention are described in details below according to the specific embodiments.

### Embodiment 1:

As shown in Fig. 3, a traffic analyzing node deployed in the Ethernet is Node A, and the traffic analyzed nodes are Node S1, Node S2 and Node S3. The method for realizing Ethernet traffic statistics and analysis in this embodiment is as shown in Fig. 7 and comprises the following steps.

Step 701: Node A respectively sends a traffic collection request message to Node S1, Node S2 and Node S3 on the links S1↔S2 and S2↔S3 according to a configured period T.

Step 702: after receiving the traffic collection request message, Node S1, Node S2 and Node S3 send a traffic reporting message respectively to report the respective port traffic information.

The port traffic information of Node S1 comprises counting information of the sent and received packets of Port 11 and Port 12 of Node S1. The port traffic information of Node S2 comprises counting information of the sent and received packets of Port 21 and Port 22 of Node S2. The port traffic information of Node S3 comprises counting information of the sent and received packets of Port 31 and Port 32 of Node S3.

Step 703: according to two pieces of port traffic information reported continuously by each of two traffic analyzed nodes connected to any one link and the reporting period T, Node A counts traffic of the packets passing through the link, traffic of the lost packets and the corresponding rates.

For example, during a certain counting process, Node S1 reports the counted number of the received packets of Port 12 as R1, and the counted number of the sent packets of Port 12 as K1; Node S2 reports the counted number of the received packets of Port 21 as R2, and the counted number of the sent packets of Port 21 as K2. During the next counting process, Node S1 reports the counted number of the received packets of Port 12 as R3, and the counted number of the sent packets of Port 12 as K3; Node S2 reports the counted number of the received packets of Port 21 as R4, and the counted number of the sent packets of Port 21 as K4.

Then, after Node A receives the information, it can be calculated and obtained that: for the link between Node S1 and Node S2, during the time period between the two counting times, the traffic of the packets sent from S1 to S2 is K3-K1 and the traffic rate of the sent packets is (K3-K1)/T; the traffic of successfully sent packets is R4-R2 and the traffic rate of the successfully sent packets is (R4-R2)/T; the traffic of the lost packets is (K3-K1)-(R4-R2), and the traffic rate of the lost packets is (K3-K1-R4+R2)/T. The traffic of the packets sent from S2 to S1 is K4-K2 and the traffic rate of the sent packets is (K4-K2)/T; the traffic of successfully sent packets is R3-R1 and the traffic rate of the successfully sent packets is (R3-R1)/T; the traffic of the lost packets is (K4-K2)-(R3-R1), and the traffic rate of the lost packets is (K4-K2-R3+R1)/T. In the same way, Node A is able to calculate and obtain the traffic statistical analytic information of the link S2↔S3.

Step 704: according to the rate of the traffic of the lost packets counted every time, an analytic diagram is constructed for the link by taking the reporting time of the traffic analyzed node as a time axis, then the rate change of the traffic of the lost packets on the link can be observed visually.

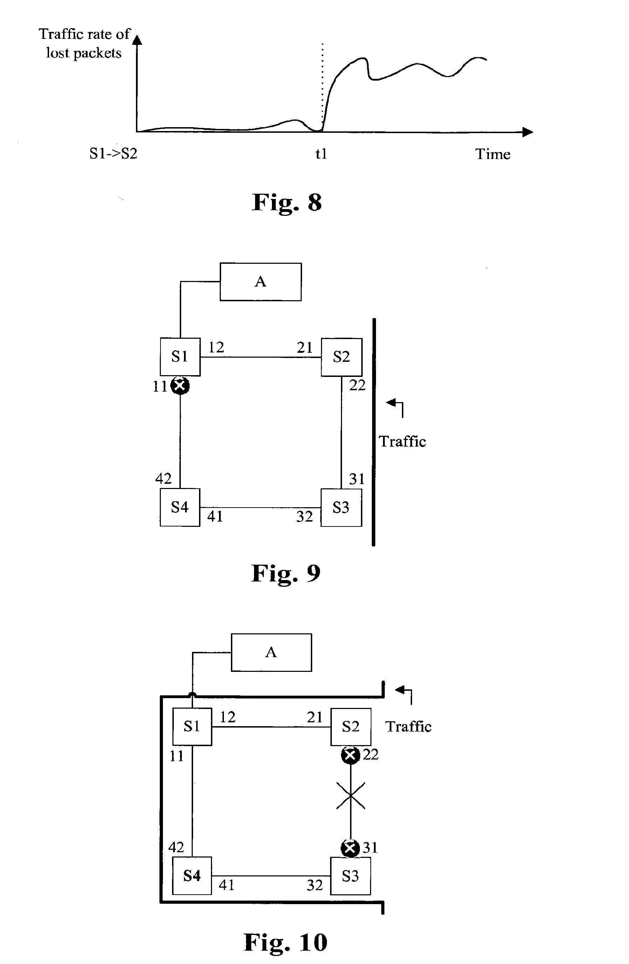

For example, when a fault occurs in the link between Node S1 and Node S2, if the link is not completely disconnected, and the link can still transmit data. However, a large number of packets are lost on the link, then it can be easily observed from the analytic diagram of the traffic rate of the lost packets on the link between Node S1 and Node S2 that, as shown in Fig. 8, the traffic rate of the lost packets from Node S 1 to Node S2 increases greatly from Moment t1, which means a great traffic loss indicating that the fault occurs in the link between Node S1 and Node S2 from Moment t1, thus facilitating management, maintenance and fault location.

### Embodiment 2:

Taking Fig. 9 as an example, Fig. 9 shows an Ethernet ring network. The Ethernet ring network, which is an Ethernet protection technology, is a network of ring topology connected by several nodes. When all links on the ring are well-conditioned, a port on the ring of a node on the ring is blocked to prevent the ring from being closed, and the traffic has only one transmission channel on the network, for example, Port 11 is blocked by Node S 1 and the traffic transmission path is S2↔S3. When a fault occurs on a link on the ring, after the fault is detected by the adjacent nodes of the fault link, the port connected with the fault link is blocked and other nodes are notified to perform switching. The blocked port is opened when the link recovers. As shown in Fig. 10, a fault occurs between Node S2 and Node S3, Port 22 is blocked by Node S2, Port 31 is blocked by Node S3, other nodes are notified to perform switching and Port 11 is opened by Node S1.

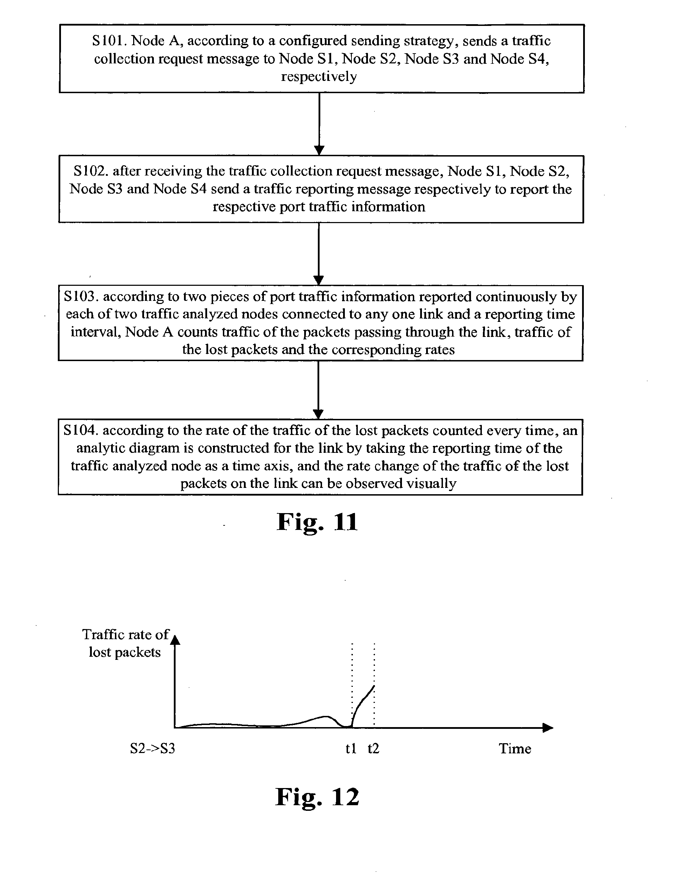

In this network, Node A is the traffic analyzing node, Node S1, Node S2, Node S3 and Node S4 are traffic analyzed nodes. Node A is connected with Node S1 and connected with other nodes via the Ethernet ring network. Fig. 11 shows an Ethernet traffic statistics and analysis method in this embodiment, comprising the following steps.

Step S101: Node A, according to a configured sending strategy, sends a traffic collection request message to Node S1, Node S2, Node S3 and Node S4, respectively.

Step S102: after receiving the traffic collection request message, Node S1, Node S2, Node S3 and Node S4 send a traffic reporting message respectively to report the respective port traffic information.

The port traffic information of Node S1 comprises counting information of the sent and received packets of Port 11 and Port 12 of Node S1. The port traffic information of Node S2 comprises counting information of the sent and received packets of Port 21 and Port 22 of Node S2. The port traffic information of Node S3 comprises counting information of the sent and received packets of Port 31 and Port 32 of Node S3. The port traffic information of Node S4 comprises counting information of the sent and received packets of Port 41 and Port 42 of Node S4.

Step S103: according to two pieces of port traffic information reported continuously by each of two traffic analyzed nodes connected to any one link and a reporting time interval, Node A counts traffic of packets passing through the link, traffic of the lost packets and the corresponding rates.

For example, the reporting time interval is T. During a certain counting process, Node S2 reports the counted number of the received packets of Port 22 as R1, and the counted number of the sent packets of Port 22 as K1; Node S3 reports the counted number of the received packets of Port 31 as R2, and the counted number of the sent packets of Port 31 as K2. During the next counting process, Node S2 reports the counted number of the received packets of Port 22 as R3, and the counted number of the sent packets of Port 22 as K3; Node S3 reports the counted number of the received packets of Port 31 as R4, and the counted number of the sent packets of Port 31 as K4.

After Node A receives the information, it can be calculated and obtained that: for the link between Node S2 and Node S3, during the time period between the two counting times, the traffic of the packets sent from S2 to S3 is K3-K1 and the traffic rate of the sent packets is (K3-K1)/T; the traffic of successfully sent packets is R4-R2 and the traffic rate of the successfully sent packets is (R4-R2)/T; the traffic of the lost packets is (K3-K1)-(R4-R2), and the traffic rate of the lost packets is (K3-K1-R4+R2)/T. The traffic of the packets sent from S3 to S2 is K4-K2 and the traffic rate of the sent packets is (K4-K2)/T; the traffic of successfully sent packets is R3-R1 and the traffic rate of the successfully sent packets is (R3-R1)/T; the traffic of the lost packets is (K4-K2)-(R3-R1), and the traffic rate of the lost packets is (K4-K2-R3+R1)/T. In the same way, Node A is able to calculate and obtain the traffic statistical analytic information of other links.

Step S104: according to the rate of the traffic of the lost packets counted every time, an analytic diagram is constructed for the link by taking the reporting time of the traffic analyzed node as a time axis, then the rate change of the traffic of the lost packets on the link can be observed visually.

For example, when a fault occurs in the link from Node S2 to Node S3, before and after protection switching is initiated by the ring network, the protection switching process can be clearly observed from Fig. 12 as follows. The traffic rate of the lost packets on the link from Node S2 to Node S3 increases greatly at Moment t1, which indicates that the traffic begins to be lost greatly at Moment t1, i.e. the fault occurs on the link; subsequently, protection switching is initiated on the ring network at Moment t2, it can be observed that there is no traffic loss on the link from Node S2 to Node S3 any more at Moment t2.

The above are only preferable embodiments of the present invention and should not be used to limit the present invention. Any modifications, equivalent replacements, improvements and the like within the principle of the present invention shall fall within the scope of protection of the present invention.

## Claims

1. An Ethernet traffic statistics and analysis method, **characterized by** comprising:
according to two pieces of port traffic information reported continuously by each of two traffic analyzed nodes which are connected to any one link and a reporting time interval, a traffic analyzing node counting traffic of packets passing through the link, traffic of lost packets and corresponding rates, and constructing an analytic diagram according to the rate of the traffic of the lost packets counted every time;
wherein the port traffic information comprises counting information of sent and received packets of a port of the traffic analyzed node.

2. The method according to claim 1, **characterized in that** the step of constructing an analytic diagram according to the rate of the traffic of the lost packets counted every time comprises:
according to the rate of the traffic of the lost packets counted every time, constructing the analytic diagram by taking a reporting time of the traffic analyzed node as a time axis.

3. The method according to claim 1 or claim 2, **characterized by** further comprising:
according to a configured sending strategy, the traffic analyzing node sending a traffic collection request message to the two traffic analyzed nodes on each link respectively; and
after receiving the traffic collection request message, the traffic analyzed nodes sending a traffic reporting message respectively to report respective port traffic information.

4. The method according to claim 3, **characterized in that** the two traffic analyzed nodes which are connected to any one link are a first node and a second node;
the counted traffic of the packets passing through the link comprises: total traffic of packets sent from the first node to the second node, traffic of packets successfully sent from the first node to the second node, total traffic of packets sent from the second node to the first node, and traffic of packets successfully sent from the second node to the first node.

5. The method according to claim 4, **characterized in that** the traffic of the lost packets comprises: traffic of lost packets from the first node to the second node, and traffic of lost packets from the second node to the first node.

6. An Ethernet traffic statistics and analysis system, comprising: an analyzing node (61) and two analyzed nodes (62) which are connected to at least one link, **characterized in that**:
the analyzing node is configured to, according to two pieces of port traffic information reported continuously by each of the two analyzed nodes which are connected to any one link and a reporting time interval, count traffic of packets passing through the link, traffic of lost packets and corresponding rates, and construct an analytic diagram according to the rate of the traffic of the lost packets counted every time; and
the analyzed nodes are configured to report respective port traffic information to the analyzing node.

7. The system according to claim 6, **characterized in that** the analyzing node is further configured to, according to a configured sending strategy, send a traffic collection request message to the two analyzed nodes on each link respectively;
the analyzed nodes are further configured to, after receiving the traffic collection request message, send a traffic reporting message respectively to report respective port traffic information.

## Patentansprüche

1. Ethernetverkehrsstatistik- und -analyseverfahren, **dadurch gekennzeichnet, dass** es Folgendes umfasst:
gemäß zwei Anschluss-Verkehrsinformationen, die kontinuierlich von jedem von zwei mit einer beliebigen Verbindungsleitung verbundenen verkehrsanalysierten Knoten gemeldet werden und einem Meldezeitintervall, Zählen, durch einen Verkehrsanalyseknoten, von Verkehr durch die Verbindungleitung gelangender Pakete, Verkehr verlorener Pakete und entsprechenden Raten und Aufbauen eines analytischen Diagramms gemäß der Verkehrsrate der jedes Mal gezählten verlorenen Pakete;
wobei die Anschluss-Verkehrsinformationen Zählinformationen gesendeter und empfangener Pakete eines Anschlusses des verkehrsanalysierten Knotens umfassen.

2. Verfahren nach Anspruch 1, **dadurch gekennzeichnet, dass** der Schritt des Aufbauens eines analytischen Diagramms gemäß der Verkehrsrate der jedes Mal gezählten verlorenen Pakete Folgendes umfasst:
gemäß der Verkehrsrate der jedes Mal gezählten Pakete, Aufbauen des analytischen Diagramms durch Heranziehen einer Meldezeit des verkehrsanalysierten Knotens als Zeitachse.

3. Verfahren nach Anspruch 1 oder Anspruch 2, **dadurch gekennzeichnet, dass** es weiter Folgendes umfasst:
gemäß einer konfigurierten Sendestrategie, jeweiliges Senden, durch den Verkehrsanalyseknoten, einer Verkehrserfassungs-Anforderungsnachricht an die zwei verkehrsanalysierten Knoten auf jeder Verbindungsleitung; und
nach dem Empfangen der Verkehrserfassungs-Anforderungsnachricht, jeweiliges Senden, durch die verkehrsanalysierten Knoten, einer Verkehrsmeldenachricht, um jeweilige Anschluss-Verkehrsinformationen zu melden.

4. Verfahren nach Anspruch 3, **dadurch gekennzeichnet, dass** es sich bei den zwei verkehrsanalysierten Knoten, die mit einer beliebigen Verbindungsleitung verbunden sind, um einen ersten Knoten und einen zweiten Knoten handelt;
der gezählte Verkehr der durch die Verbindungsleitung gelangenden Pakete folgendes umfasst: Gesamtverkehr von dem ersten Knoten zu dem zweiten Knoten gesendeter Pakete, Verkehr erfolgreich von dem ersten Knoten zu dem zweiten Knoten gesendeter Pakete, Gesamtverkehr von dem zweiten Knoten zu dem ersten Knoten gesendeter Pakete und Verkehr erfolgreich von dem zweiten Knoten zu dem ersten Knoten gesendeter Pakete.

5. Verfahren nach Anspruch 4, **dadurch gekennzeichnet, dass** der Verkehr der verlorenen Pakete Folgendes umfasst: Verkehr verlorener Pakete von dem ersten Knoten zu dem zweiten Knoten und Verkehr verlorener Pakete von dem zweiten Knoten zu dem ersten Knoten.

6. Ethernetverkehrsstatistik- und -analysesystem, das Folgendes umfasst: einen Analyseknoten (61) und zwei analysierte Knoten (62), die mit mindestens einer Verbindungsleitung verbunden sind, **dadurch gekennzeichnet, dass**:
der Analyseknoten dazu konfiguriert ist, gemäß zwei Anschluss-Verkehrsinformationen, die kontinuierlich von jedem der zwei mit einer beliebigen Verbindungsleitung verbundenen verkehrsanalysierten Knoten gemeldet werden und einem Meldezeitintervall, Verkehr durch die Verbindungsleitung gelangender Pakete, Verkehr verlorener Pakete und entsprechende Raten zu zählen und ein analytisches Diagramm gemäß der Verkehrsrate der jedes Mal gezählten verlorenen Pakete aufzubauen; und
die analysierten Knoten dazu konfiguriert sind, jeweilige Anschluss-Verkehrsinformationen an den Analyseknoten zu melden.

7. System nach Anspruch 6, **dadurch gekennzeichnet, dass** der Analyseknoten weiter dazu konfiguriert ist, auf jeder Verbindungsleitung jeweils gemäß einer konfigurierten Sendestrategie eine Verkehrserfassungs-Anforderungsnachricht an die zwei analysierten Knoten zu senden;
wobei die analysierten Knoten weiter dazu konfiguriert sind, nach dem Empfangen der Verkehrserfassungs-Anforderungsnachricht, jeweils eine Verkehrsmeldenachricht zu senden, um jeweilige Anschluss-Verkehrsinformationen zu melden.

## Revendications

1. Procédé de statistiques et d'analyse de trafic Ethernet, **caractérisé en ce qu'**il comporte :
en fonction de deux éléments d'informations de trafic de port rapportées de manière continue par chacun de deux noeuds analysés en trafic qui sont connectés à une liaison quelconque et d'un intervalle de temps de rapport, un noeud d'analyse de trafic qui compte le trafic de paquets passant par la liaison, le trafic de paquets perdus et les vitesses correspondantes, et qui construit un diagramme analytique en fonction de la vitesse du trafic des paquets perdus comptés à chaque fois ;
dans lequel les informations de trafic de port comportent des informations de décompte des paquets envoyés et reçus d'un port du noeud analysé en trafic.

2. Procédé selon la revendication 1, **caractérisé en ce que** l'étape consistant à construire un diagramme analytique en fonction de la vitesse du trafic des paquets perdus comptés à chaque fois comporte :
en fonction de la vitesse du trafic des paquets perdus comptés à chaque fois, l'étape consistant à construire le diagramme analytique en prenant un temps de rapport du noeud analysé en trafic comme axe de temps.

3. Procédé selon la revendication 1 ou la revendication 2, **caractérisé en ce qu'**il comporte par ailleurs :
en fonction d'une stratégie d'envoi configurée, le noeud d'analyse de trafic envoyant un message de demande de collecte de trafic aux deux noeuds analysés en trafic sur chaque liaison respectivement ; et
après la réception du message de demande de collecte de trafic, les noeuds analysés en trafic envoyant un message de rapport de trafic respectivement pour rapporter des informations de trafic de port respectives.

4. Procédé selon la revendication 3, **caractérisé en ce que** les deux noeuds analysés en trafic qui sont connectés à une liaison quelconque sont un premier noeud et un deuxième noeud ;
le trafic compté des paquets passant par la liaison comporte : le trafic total de paquets envoyés depuis le premier noeud jusqu'au deuxième noeud, le trafic de paquets envoyés avec succès depuis le premier noeud jusqu'au deuxième noeud, le trafic total de paquets envoyés depuis le deuxième noeud jusqu'au premier noeud, et le trafic de paquets envoyés avec succès depuis le deuxième noeud jusqu'au premier noeud.

5. Procédé selon la revendication 4, **caractérisé en ce que** le trafic des paquets perdus comporte : le trafic de paquets perdus depuis le premier noeud jusqu'au deuxième noeud, et le trafic de paquets perdus depuis le deuxième noeud jusqu'au premier noeud.

6. Système de statistiques et d'analyse de trafic Ethernet, comportant : un noeud d'analyse (61) et deux noeuds analysés (62) qui sont connectés à au moins une liaison, **caractérisé en ce que** :
le noeud d'analyse est configuré pour, en fonction de deux éléments d'informations de trafic de port rapportées de manière continue par chacun de deux noeuds analysés qui sont connectés à une liaison quelconque et d'un intervalle de temps de rapport, compter le trafic de paquets passant par la liaison, le trafic de paquets perdus et les vitesses correspondantes, et construire un diagramme analytique en fonction de la vitesse du trafic des paquets perdus comptés à chaque fois ; et
les noeuds analysés sont configurés pour rapporter des informations de trafic de port respectives au noeud d'analyse.

7. Système selon la revendication 6, **caractérisé en ce que** le noeud d'analyse est par ailleurs configuré pour, en fonction d'une stratégie d'envoi configurée, envoyer un message de demande de collecte de trafic aux deux noeuds analysés sur chaque liaison respectivement ;
les noeuds analysés sont par ailleurs configurés pour, après la réception du message de demande de collecte de trafic, envoyer un message de rapport de trafic respectivement pour rapporter des informations de trafic de port respectives.
